# EUROPÄISCHE PATENTANMELDUNG

(11) **EP 1 427 090 A1**
(43) Veröffentlichungstag der Anmeldung: **09.06.2004**
(21) Anmeldenummer: 03025895.8
(22) Anmeldetag: 12.11.2003
(51) Int. Cl.: H02K 15/00, H02K 7/00, H02K 17/16

(54) **Käfigläufer für einen Elektromotor und Verfahren zum Herstellen eines solchen Käfigläufers**

(30) Priorität: 02.12.2002 DE 10256399
(71) Anmelder: elero GmbH, 72660 Beuren (DE)
(72) Erfinder: Gollmer, Werner, 73252 Lenningen (DE)
(74) Vertreter: Patentanwälte Westphal, Mussgnug & Partner

(57) **Zusammenfassung**

Die Erfindung betrifft einen Käfigläufer und ein Verfahren zum Herstellen eines solchen Käfigläufers bei welchem eine Vielzahl von aufeinandergestapelten Blechen (14) als Läuferpaket (12) mit Durchgangsöffnungen und/oder Durchgangsschlitzen (16) bereitgestellt werden. Dieses Läuferpaket (12) wird mit einem Druckguss aus geschmolzenem, leitfähigem Material umgossen, um einen Rotorleiter in mindestens einem Teil der Durchgangsöffnungen und/oder Durchgangsschlitzen (16) zu bilden und gleichzeitig einstückig an dem linken und rechtem Ende des Läuferpaketes (12) linke und rechte Kurzschlussringe (22) anzuformen. Erfindungsgemäß schließt sich an diese Kurzschlussringe (22) einstückig eine gleichzeitig während des Druckgießens ausgebildete Läuferwelle (30'), (30) an.

## Beschreibung

Synchronmotoren mit Käfigläufern sind hinlänglich bekannt. 80 % aller elektrischen Maschinen sind heutzutage Asynchronmotoren. 95 % dieser Asynchronmotoren besitzen Käfigläufer. Die Vorteile solcher Asynchronmotoren mit Käfigläufer liegen in deren einfachen und robusten Aufbau. Darüber hinaus sind diese Asynchronmotoren mit Käfigläufer im Vergleich zu anderen Motoren verhältnismäßig preisgünstig herzustellen. Die Bedeutung von Asynchronmotoren mit Käfigläufer hat in den letzten Jahren mit zunehmender Verfügbarkeit preiswerter Leistungselektronik weiter zugenommen.

Im Unterschied zu Asynchronmotoren mit Schleifringläufer sind bei Asynchronmotoren mit Käfigläufer die Läufernuten nicht mehr mit Wicklungen ausgelegt, sondern mit Profilstäben aus elektrisch leitenden Material, wie z.B. Kupfer, Bronze oder Aluminium etc. Diese Stäbe sind auf beiden Seiten des Läufers über sogenannte Kurzschlussringe des gleichen Materials miteinander verbunden, so dass ein Käfig mit Längsstäben entsteht. Bei Verwendung von Aluminium bedient man sich eines Druckgussverfahrens. Der Aluminiumkäfig wird im Druckgussverfahren in das Blechpaket eingegossen. Bei dieser Methode sind sehr mannigfaltige Nutausführungen mit Einfach- oder Doppelkäfigen üblich. Da der Läufer nur die Aufgabe hat, einen kräftigen Induktionsstrom zu erzeugen (daher auch der Name Kurzschlussläufer) bedarf es nicht unbedingt einer komplizierten Käfigform. Motoren mit solchen oder auch mit beliebig anderen Käfigläufern sind sehr robust und wenig störanfällig.

Ein bekanntes Verfahren zum Herstellen solcher Käfigläufer ist beispielweise in DE 43 29 679 C2 beschrieben. Es wird zuerst ein zylindrisch laminierter Rotorkern, also ein Läuferpaket, hergestellt, indem eine Vielzahl von Blechlamellen überlagert werden, in denen Löcher oder Schlitze ausgebildet sind. Dieses Blechpaket wird auf eine Welle geschoben und an dieser Welle, die die Motorwelle bildet, befestigt. Anschließend wird Aluminium oder eine Aluminiumlegierung in Hohlraumteile, die in dem Blechpaket ausgebildet sind, als leitfähiges Material eingespritzt und zusätzlich an den linken und rechten Enden des Blechpakets die Kurzschlussringe einstückig angeformt. Im nächsten Schritt wird ein Pressguss mit dem leitfähigen Material durchgeführt, um den Käfigläufer zu formen. Schließlich erfolgt eine Nachbearbeitung der rechten und linken Kurzschlussringe und der äußeren Umfangsteile des Läuferpakets. Der fertige Käfigläufer ist in DE 43 29 679 C2 in Fig. 4 gezeigt. Das im Druckgussverfahren in und um das Läuferpaket gegossene, elektrisch leitfähige Material ist in Fig. 4 gepunktet dargestellt.

Damit dieser Käfigläufer innerhalb eines Asynchronmotors drehen kann, ist es zwingend notwendig, dieses mit elektrisch leitfähigen Material umspritzte Läuferpaket auf die bereits erwähnte Motorwelle zu befestigen, was einen weitern Montageschritt erforderlich macht.

Der vorliegenden Erfindung liegt die Aufgabe zu Grunde, einen Käfigläufer und ein Verfahren zum Herstellen eines solchen Käfigläufers anzugeben, welcher sehr einfach und montagefreundlich hergestellt werden kann.

Diese Aufgabe wird für das Verfahren durch die Merkmale des Anspruchs 1 und für die Vorrichtung durch die Merkmale des Anspruchs 2 gelöst.

Weiterbildungen der Erfindung sind Gegenstand der Unteransprüche.

Die grundliegende Idee der vorliegenden Erfindung besteht darin, dass während des Druckgussverfahrens nicht nur die Kurzschlussringe sondern zugleich eine Läuferwelle ausgebildet wird.

Nähere Einzelheiten der Erfindung werden im Zusammenhang mit den nachfolgenden Fig.en anhand eines Ausführungsbeispiels erläutert. Es zeigen:
- Fig. 1:: eine Schnittansicht eines Käfigläufers nach der Erfindung,
- Fig. 2:: ein Blech des Läuferpakets in Draufsicht, und
- Fig. 3:: das Blech von Fig. 2 in Schnittansicht entlang der Schnittlinie II-II von Fig. 2

In den nachfolgenden Figuren bezeichnen, sofern nicht anders angegeben, gleiche Bezugszeichen gleiche Teile mit gleicher Bedeutung.

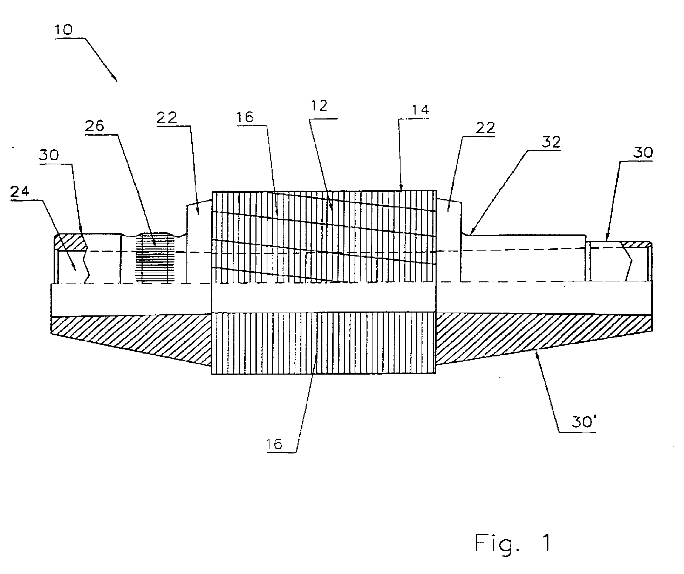

In Fig. 1 ist die Schnittansicht eines Käfigläufers 10 nach der Erfindung dargestellt. Die untere Teilansicht von Fig. 1 zeigt den Käfigläufer 10 mit noch unbearbeiteter Läuferwelle 30', während in der oberen Hälfte von Fig. 1 der Käfigläufer 10 mit Läuferwelle 30 gezeigt ist. Einzelheiten werden hierzu weiter unten erläutert.

Der Käfigläufer 10 verfügt mittig über ein Läuferpaket 12, das aus einer Vielzahl von aufeinandergestapelten Blechen 14 gebildet ist.

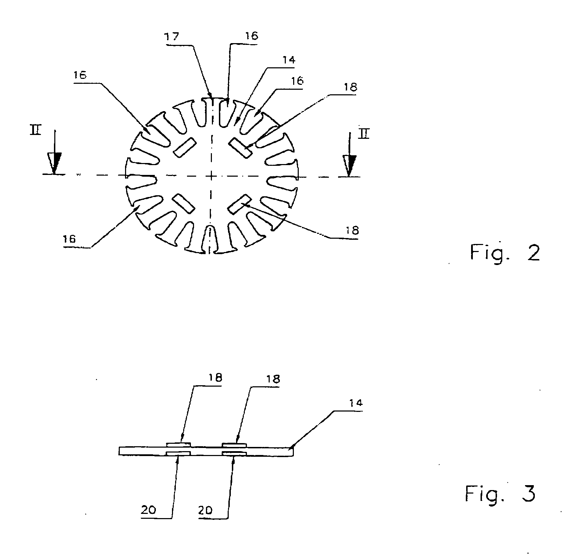

In Fig. 2 und Fig. 3 ist beispielhaft eines dieser Bleche 14 in Draufsicht und Schnittdarstellung entlang der Schnittlinie II-II zeigt. Das Blech 14 weist in an sich bekannter Weise an seiner äußeren Umfangsfläche wechselnd Durchgangsöffnungen 16 und Vorsprünge 17 auf. Zur Bildung eines Läuferpakets 12 werden eine Vielzahl solcher Bleche aufeinandergestapelt. Um ein stanzpaketiertes Fertigen dieses Läuferpaketes 12 sicherzustellen, weist jedes der Bleche 14 auf seiner Oberseite Nasen oder Haken 18 und an seiner Unterseite entsprechende Öffnungen 20 bzw. Ausnehmungen auf. Die Nasen 18 sind in ihren Abmessungen etwas größer als die Öffnungen bzw. Nuten 20 ausgebildet, so dass die einzelnen Bleche 14 aufeinandergepresst zu einander verklemmt werden können. Das gesamte Läuferpaket 12 haltert damit selbsttätig. Die Öffnungen 16 der einzelnen Bleche 14 werden beim Aufeinanderstapeln der Bleche 14 so zu einander angeordnet, dass diese an der Umfangsfläche des Läuferpakets 12 schräg verlaufende Schlitze bzw. Durchgangsöffnungen ergeben, wie dies in Fig. deutlich zu erkennen ist.

Ein so vorbereitetes, stanzpaketiertes Läuferpaket 12 wird in ein Werkzeug einer Druckgussmaschine eingelegt und anschließend von elektrisch, leitfähigen Material umgossen. Anstelle eines solchen stanzpaketiertes Läuferpaketes 12 kann jedoch auch ein Läuferpaket aus Vollmaterial verwendet werden. Das elektrisch leitfähige Material kann beispielsweise Aluminium, Kupfer, Zink oder Silumin sein. Das Umspritzen des Läuferpakets 12 mit dem Druckgussmaterial erfolgt derart, dass sich einerseits die Durchgangsöffnungen 16 des Läuferpakets 12 mit dem elektrisch leitendem Material füllen. Darüber hinaus wird an den linken und rechtem Enden, also der Ober- und Unterseite des Läuferpakets 12 das Druckgussmaterial einstückig, stangenförmig angeformt. Die äußere Kontur dieser einstückig an die linke und rechte Seite des Läuferpakets 12 angeformten Fortsätze ist in Fig. 1 in der unteren Hälfte dargestellt und mit dem Bezugszeichen 30' versehen. Im Inneren des Käfigläufers 10 erstreckt sich eine Durchgangsbohrung 24.

Das im Druckgussverfahren umspritzte Läuferpaket 12 mit seinen linken und rechten Fortsätzen, die sich zu ihren jeweiligen Enden hin konisch verjüngen, wird in einem weiteren Verfahrensschritt so bearbeitet, dass die in Fig. 1 oben dargestellte äußere Kontur erreicht wird. Es ist jedoch auch möglich, dass das Druckgussverfahren gleich so durchgeführt wird, dass keinerlei Nachbearbeitung notwendig ist. In diesem Fall werden die linken und rechten Fortsätze samt angeformter Läuferwelle gleich maßgenau gegossen.

Der unmittelbar nach dem Druckgussverfahren hergestellte "Rohkäfigläufer" wird hierfür drehend bearbeitet, so dass sich von den Kurzschlussringen 22 etwa im rechten Winkel links und rechts Enden einer Läuferwelle 30 wegerstrecken. Die Läuferwelle 30 hat einen deutlich geringeren Durchmesser als die Kurzschlussringe 22. Der Übergang von Kurzschlussring 22 zu Läuferwelle 30 ist bevorzugt etwa rechtwinkelig mit einem leichten Radius vorgesehen. Die Stufung ist in Fig. 1 mit dem Bezugszeichen 32 bezeichnet.

Das in Fig. eins links dargestellte Ende der Läuferwelle 30 verfügt über eine Rändelung 26.

Zusätzlich kann auf einem oder beiden Enden der Läuferwelle 30 ein Ritzel oder eine Kupplung einstückig angeformt oder aufgesetzt sein.

### Bezugszeichenliste

- 10: Käfigläufer
- 12: Läuferpaket
- 14: Blech
- 16: Durchgangsöffnung
- 18: Nase, Haken
- 20: Öffnung, Nut
- 22: Kurzschlussring
- 24: Durchgangsbohrung
- 26: Rändelung
- 30, 30': Läuferwelle
- 32: Stufung

## Patentansprüche

1. Verfahren zum Herstellen eines Käfigläufers (10) für die Verwendung in einem Elektromotor mit den Verfahrensschritten:
- Bereitstellen eines aus einer Vielzahl von aufeinandergestapelten Blechen (14) gebildeten Läuferpakets (12) mit Durchgangsöffnungen und/oder Durchgangsschlitzen (16),
- Durchführen eines Druckgusses aus geschmolzenem, leitfähigen Material, um einen Rotorleiter in mindestens einem Teil der Durchgangsöffnungen und/oder Durchgangsschlitzen (16) zu bilden und gleichzeitig einstückig linke und rechte Kurzschlussringe (22) an dem linken und rechtem Ende des Läuferpakets (12) anzuformen,
**dadurch gekennzeichnet, dass** während
des Druckgusses an die linken und rechten Kurzschlussringe (22) einstückig eine Läuferwelle (30),(30') angeformt wird.

2. Käfigläufer (10) für einen Elektromotor mit folgenden Merkmalen:
- ein Läuferpaket (12) mit einer Vielzahl von aufeinander gestapelten Blechen (14) mit Durchgangsöffnungen und/oder Durchgangsschlitzen (16) ein Rotorleiter, der mittels Druckguss aus geschmolzenem, leitfähigen Material gebildet ist, welcher zumindest teilweise die Durchgangslöcher und/oder Durchgangsschlitze (16) ausfüllt und am linken und rechten Ende des Läuferpakets (12) einstückig in einen linken und rechten Kurzschlussring (23) übergeht,
**dadurch gekennzeichnet, dass** an die linken und rechten Kurzschlußringe (22) eine Läuferwelle (30), (30') angeformt ist.

3. Käfigläufer nach Anspruch 2,
**dadurch gekennzeichnet, dass** das Läuferpaket (12) aus aufeinander gepressten Stahlblechen gebildet ist.

4. Käfigläufer nach Anspruch 2 oder 3,
**dadurch gekennzeichnet, dass** die aufeinander gestapelten Bleche (14) mittels Nasen (18) und Öffnungen oder Nuten (20) ineinander verhakt und als stanzpaketiertes Läuferpaket (12) bereitgestellt sind.

5. Käfigläufer nach einem der Ansprüche 2 bis 4,
**dadurch gekennzeichnet,dass** die einstückig an die linken und rechten Ende des Läuferpakets (12) angeformten Kurzschlussringe (12) und/oder Läuferwelle (30), (30') ihre Endform durch eine drehende Bearbeitung der unmittelbar nach dem Druckguss gebildeten Rohform erhalten.

6. Käfigläufer nach einem der Ansprüche 2 bis 5,
**dadurch gekennzeichnet, dass** sich die Läuferwelle (30) zu ihrem jeweiligen Ende hin konisch verjüngt.

7. Käfigläufer nach einem der Ansprüche 2 bis 6,
**dadurch gekennzeichnet, dass** als Druckgussmaterial Kupfer, Aluminium, Zink oder Silumin verwendet wird.

8. Käfigläufer nach einem der Ansprüche 2 bis 7,
**dadurch gekennzeichnet, dass** der Käfigläufer eine durchgehende Durchgangsbohrung (24) zur Aufnahme einer Antriebswelle aufweist.

9. Käfigläufer nach einem der Ansprüche 2 bis 8,
**dadurch gekennzeichnet, dass** an mindestens einem der Enden der Läuferwelle (30) ein Ritzel und/oder eine Kupplung einstückig angeformt oder aufgesetzt ist.

10. Käfigläufer nach einem der Ansprüche 2 bis 9,
**dadurch gekennzeichnet, dass** an mindestens einem der Enden der Läuferwelle (30) eine Rändelung angeformt ist.

11. Käfigläufer nach einem der Ansprüche 2 bis 10,
**dadurch gekennzeichnet, dass** der Durchmesser der Läuferwelle (30) geringer als der Durchmesser des Kurzschlussrings (22) ist, und dass der Übergang zwischen Kurzschlussring (22) und Läuferwelle (30) als in etwa annähernd rechtwinklige Stufung (32) ausgeformt ist.

12. Käfigläufer nach einem der Ansprüche 1 bis 11,
**dadurch gekennzeichnet, dass** die linken und rechten Kurzschlussringe (22) und die Läuferwelle (30) maßgenau im Druckgussverfahren angeformt werden.

13. Käfigläufer nach einem der Ansprüche 1 bis 12,
**dadurch gekennzeichnet, dass** das Läuferpaket (12) aus Vollmaterial gebildet ist.
